# EUROPEAN PATENT APPLICATION

(11) **EP 4 844 836 A1**
(43) Date of publication of application: **25.11.2026**
(21) Application number: 25774775.8
(22) Date of filing: 18.03.2025
(51) Int. Cl.: H01M 4/525, H01M 4/505, H01M 4/02

(54) **POSITIVE ELECTRODE ACTIVE MATERIAL PRECURSOR**

(30) Priority: 18.03.2024 KR 20240037382
(71) Applicant: LG Chem, Ltd., Seoul 07336 (KR)
(72) Inventor: LEE, Sang Won, Daejeon 34122 (KR); JEONG, Jong Seok, Daejeon 34122 (KR); PARK, Je Seob, Daejeon 34122 (KR); CHOI, Eun Young, Daejeon 34122 (KR); YANG, Seo Jeong, Daejeon 34122 (KR); JUNG, Won Sig, Daejeon 34122 (KR); KIM, Jong Pil, Daejeon 34122 (KR); PARK, Jung Won, Daejeon 34122 (KR); PARK, Se Jung, Daejeon 34122 (KR); KIM, Nam Il, Daejeon 34122 (KR); KIM, Hoe Yeon, Daejeon 34122 (KR)
(74) Representative: Hoffmann Eitle
(86) International application number: PCT/KR2025/003503
(87) International publication number: WO 2025/198303

(57) **Abstract**

The present invention relates to a positive electrode active material precursor having a secondary particle form formed by aggregation of a plurality of primary particles, and an average of structural orientation DoA Crystal values of 0.5 or more as represented by Equation 1 below: [Equation 1] $DoA Crystal = {sin}^{2} θ$ wherein θ is an angle between a vector in the straight direction from the center of the secondary particle to the surface and a vector in the c-axis direction of the crystal grain after obtaining a TEM image of the cross-section of the positive electrode active material precursor.

## Description

### [Technical Field]

### CROSS-REFERENCE TO RELATED APPLICATION

The present application claims priority to Korean Patent Application No. 10-2024-0037382, filed on March 18, 2024, the entire content of which is incorporated herein for all purposes by reference.

### Technical Field

The present invention relates to a positive electrode active material precursor, and more specifically, to a positive electrode active material precursor for a lithium secondary battery, which is capable of implementing a positive electrode active material having excellent lifespan and lifespan resistance characteristics by securing an optimal lithium migration path within particles and improving structural stability during charging and discharging.

### [Background Art]

Recently, as technology development and demand for mobile devices and electric vehicles increase, demand for secondary batteries as an energy source is rapidly increasing. Among the secondary batteries, a lithium secondary battery, which has high energy density and voltage, long cycle lifespan and low self-discharge rate, has been commercialized and is widely used.

As positive electrode active materials for lithium secondary batteries, lithium transition metal oxides such as lithium cobalt oxide such as LiCoO₂, lithium nickel oxide such as LiNiO₂, lithium manganese oxide such as LiMnO₂ or LiMn₂O₄, and lithium iron phosphate oxide such as LiFePO₄ have been developed, and recently, lithium composite transition metal oxides containing two or more transition metals such as Li[NiₐCo_{b}Mn_{c}]O₂, Li[NiₐCo_{b}Al_{c}]O₂, and Li[NiₐCo_{b}Mn_{c}Al_{d}]O₂ have been developed and are widely used.

Lithium composite transition metal oxides containing two or more transition metals developed to date are usually manufactured in the form of a spherical secondary particle in which tens to hundreds of primary particles are aggregated. However, the physical properties such as lithium ion mobility and electrolyte impregnation vary depending on the orientation of the primary particles or the shape (aspect ratio) of the primary particles. Accordingly, studies are being conducted to improve the performance of the positive electrode active material by controlling the particle structure of the positive electrode active material particles.

In this regard, it is known that it is advantageous to shorten the movement distance of lithium ions by making the primary particle shape of the positive electrode active material precursor into a rod or columnar shape, or by making the primary particles arranged radially from the center of the secondary particle toward the surface. However, these morphological factors have the disadvantage that they do not accurately represent the actual battery performance because information on the crystal structure of the particles is missing.

To complement this problem, XRD, which can confirm crystal structure information, is being utilized for analysis, but there is a limitation in analyzing the crystal structure of a micro-area due to the limitation of the beam size, and although it is known that quantitative analysis is possible through the integral value of the diffraction peak, there is a disadvantage in that a comparable reference sample is required or additional measurement information (FT-IR) is required.

Therefore, there is a need for research on the crystal grain structure of the positive electrode active material precursor, which substantially represents the battery performance.

### [Disclosure]

### [Technical Problem]

The present invention is intended to solve the above problems, and aims to provide a positive electrode active material precursor having an average of DoA Crystal values, which is a parameter that can indicate a structural orientation, of 0.5 or more, which can implement a positive electrode active material having excellent lifespan and lifespan resistance characteristics.

### [Technical Solution]

The present invention provides a positive electrode active material precursor.

(1) The present invention provides a positive electrode active material precursor having a secondary particle form formed by aggregation of a plurality of primary particles, and an average of structural orientation DoA Crystal values of 0.5 or more as represented by Equation 1 below:

   [Equation 1] $DoA Crystal = {sin}^{2} θ$
   wherein θ is an angle between a vector in the straight direction from the center of the secondary particle to the surface and a vector in the c-axis direction of the crystal grain after obtaining a TEM image of the cross-section of the positive electrode active material precursor.
(2) The present invention provides the positive electrode active material precursor according to (1) above, wherein the average of the DoA crystal values is 0.6 or more.
(3) The present invention provides the positive electrode active material precursor according to (1) or (2) above, wherein the average of the DoA crystal values is 0.7 or more.
(4) The present invention provides the positive electrode active material precursor according to any one of (1) to (3) above, wherein the positive electrode active material precursor has an average of L values of 0.3 or more according to Equation 2 below:

   [Equation 2] $L = \left(a-axis length of crystal grain\right) / \left(c-axis length of crystal grain\right)$
   wherein the a-axis length of the crystal grain is a length of the longest axis among the a-axis direction vectors passing through the crystal grain, and the c-axis length of the crystal grain is a length of the longest axis among the c-axis direction vectors passing through the crystal grain.
(5) The present invention provides the positive electrode active material precursor according to (4) above, wherein the average of the L values is 0.4 or more.
(6) The present invention provides the positive electrode active material precursor according to (4) or (5) above, wherein the average L value is 0.5 or more.
(7) The present invention provides the positive electrode active material precursor according to any one of (1) to (6) above, wherein the positive electrode active material precursor comprises a composite transition metal hydroxide represented by the following Chemical Formula 1:

   [Chemical Formula 1] NiₐCo_{b}Mn_{c}M_{d}(OH)₂

   wherein M is at least one element selected from the group consisting of Al, W, Cu, Fe, V, Cr, Ti, Zr, Zn, Ta, Y, In, La, Sr, Ga, Sc, Gd, Sm, Ca, Ce, Nb, Mg, B, and Mo,
   $0.6 \leq a < 1.0 , 0 < b < 0.4 , 0 < c < 0.4 , and 0 \leq d \leq 0.2 .$
(8) The present invention provides the positive electrode active material precursor according to any one of (1) to (7) above, wherein the positive electrode active material precursor has a BET specific surface area of 2.0 m²/g to 15.0 m²/g.
(9) The present invention provides the positive electrode active material precursor according to any one of (1) to (8) above, wherein the positive electrode active material precursor has a BET specific surface area of 3.0 m²/g to 15.0 m²/g.
(10) The present invention provides the positive electrode active material precursor according to any one of (1) to (9) above, wherein the positive electrode active material precursor has an average particle diameter (D₅₀) of 2.0 µm to 20.0 µm.

### [Advantageous Effects]

The positive electrode active material precursor of the present invention satisfies an average of DoA Crystal values, which is a parameter that can indicate a structural orientation of crystal grains, of 0.5 or more, thereby enabling the implementation of a positive electrode active material having an optimal lithium mobility and improved structural stability during charging and discharging.

### [Description of Drawings]

FIG. 1 is a diagram showing a difference in structural orientation and shape orientation according to the cross-section of a single crystal primary particle having a triaxial ellipsoid shape.
FIGS. 2 to 4 are sequentially the TEM image, c-axis direction map, and image showing the DoA Crystal and the angle between the c-axis and the xy-plane of a positive electrode active material precursor according to Example 1.
FIGS. 5 to 7 are sequentially the TEM image, c-axis direction map, and image showing the DoA Crystal and the angle between the c-axis and the xy-plane of a positive electrode active material precursor according to Example 2.
FIGS. 8 to 10 are sequentially the TEM image, c-axis direction map, and image showing the DoA Crystal and the angle between the c-axis and the xy-plane of a positive electrode active material precursor according to Example 3.
FIGS. 11 to 13 are sequentially the TEM image, c-axis direction map, and image showing the DoA Crystal and the angle between the c-axis and the xy-plane of a positive electrode active material precursor according to Example 4.

### [Best Modes of the Invention]

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

In the present invention, a 'crystal grain' refers to a single crystal particle unit having a regular atomic arrangement.

In the present invention, a "primary particle" refers to a minimum particle unit distinguished as a single lump when a cross-section of a positive electrode active material is observed through a scanning electron microscope (SEM), and may be formed of one crystal grain or a plurality of crystal grains. In the present invention, the average particle diameter of the primary particle can be measured by a method of measuring the size of each particle distinguished in the cross-section SEM data of a positive electrode active material.

In the present invention, a "secondary particle" refers to a secondary structure formed by aggregating a plurality of primary particles. The average particle diameter of the secondary particle can be measured using a particle size analyzer, and in the present invention, Microtrac's s3500 was used as the particle size analyzer.

Hereinafter, the present invention will be described in detail.

The present inventors have conducted repeated studies to develop a positive electrode active material precursor capable of implementing a positive electrode active material having an optimal lithium movement path within particles and improved structural stability during charging and discharging, and as a result, have found that when an average of DoA Crystal values, which is a parameter that can indicate a structural orientation, is 0.5 or more, excellent lifespan and lifespan resistance characteristics of a secondary battery can be improved, thereby completing the present invention.

### Positive Electrode Active Material Precursor

The positive electrode active material precursor according to the present invention is characterized by having a secondary particle form formed by aggregation of a plurality of primary particles, and satisfying an average of structural orientation DoA Crystal values of 0.5 or more as represented by Equation 1 below:

[Equation 1] $DoA Crystal = {sin}^{2} θ$
wherein θ is an angle between a vector in the straight direction from the center of the secondary particle to the surface and a vector in the c-axis direction of the crystal grain after obtaining a TEM image of the cross-section of the positive electrode active material precursor.

First, the DoA Crystal represented by Equation 1 above will be described.

The DoA Crystal represented by Equation 1 above is intended to indicate the orientation of the c-axis direction vector of the crystal grain, and is a value analyzed using TEM-ASTAR. ASTAR is a crystal and orientation analysis equipment with superior spatial resolution compared to EBSD, and is a TEM-based orientation analysis equipment that can analyze even a thin section (approximately 100 nm or less) having a thickness that can be transmitted by electrons. TEM-ASTAR is an instrument that forms a diffraction pattern (hereinafter referred to as DP) with a transmission electron beam and analyzes phase and orientation through matching between the measured DP and the simulated DP, and has a spatial resolution of 4 nm.

The θ is, for example, an angle between a vector in the straight direction from the center of the secondary particle to the surface and a vector in the c-axis direction at a specific pixel in a TEM image. Here, the center of the secondary particle is the center of gravity of the particle. The θ can be obtained through the inner product formula from the components of a vector in the straight direction from the center of the secondary particle to the surface and a vector in the c-axis direction at a specific pixel in a TEM image.

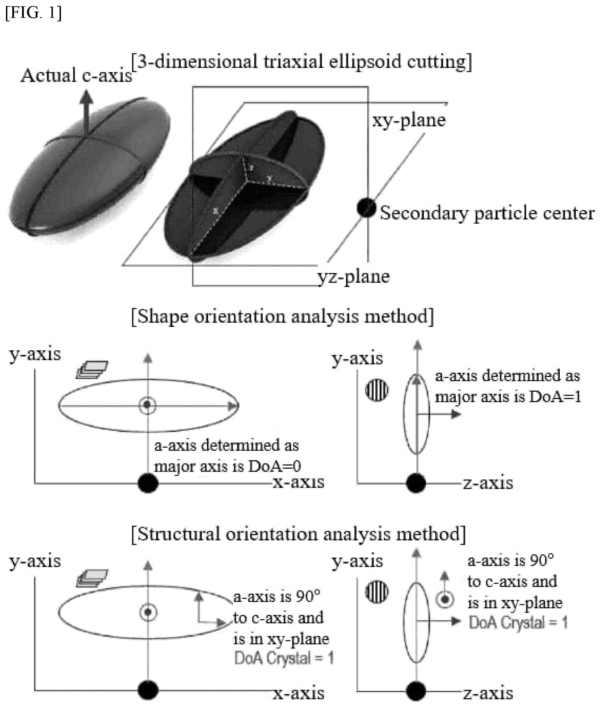

In addition, the c-axis direction vector of the crystal grain is an actual c-axis direction vector, and is different from the short-axis vector perpendicular to the major axis of the primary particle used when confirming the shape orientation. FIG. 1 is a diagram showing a difference in structural orientation and shape orientation according to the cross-section of a single crystal primary particle having a triaxial ellipsoid shape. As shown in FIG. 1, when the primary particle, which is a single crystal, has a triaxial ellipsoid shape, the structural orientation DoA Crystal does not change depending on the cross-section, but the shape orientation (DoA), which is a sine square value of an angle between the vector in the straight direction from the center of the secondary particle to the surface and the major axis of the primary particle, may change.

The DoA Crystal described in this specification can be obtained, for example, by the following method.

First, by performing crystal orientation analysis with TEM-ASTAR, the crystal orientation at each pixel in the two-dimensional image of the sample can be obtained as an Euler angle. The definition of each Euler angle follows the Bunge convention. The equation for converting the Euler angle into a rotation matrix is as follows, and the rotation matrix below is a matrix that converts the crystal coordinate system to the sample coordinate system.$R = \left[\begin{matrix}- sin \left({φ}_{1}\right) sin \left({φ}_{2}\right) cos \left(ϕ\right) + cos \left({φ}_{1}\right) cos \left({φ}_{2}\right) & - sin \left({φ}_{1}\right) cos \left(ϕ\right) cos \left({φ}_{2}\right) - sin \left({φ}_{2}\right) cos \left({φ}_{1}\right) & sin \left(ϕ\right) sin \left({φ}_{1}\right) \\ sin \left({φ}_{1}\right) cos \left({φ}_{2}\right) + sin \left({φ}_{2}\right) cos \left(ϕ\right) cos \left({φ}_{1}\right) & - sin \left({φ}_{1}\right) sin \left({φ}_{2}\right) + cos \left(ϕ\right) cos \left({φ}_{1}\right) cos \left({φ}_{2}\right) & - sin \left(ϕ\right) cos \left({φ}_{1}\right) \\ sin \left(ϕ\right) sin \left({φ}_{2}\right) & sin \left(ϕ\right) cos \left({φ}_{2}\right) & cos \left(ϕ\right)\end{matrix}\right]$

Since the c-axis vector of the crystal in the crystal coordinate system is [0, 0, 0]^T, the c-axis direction in the sample coordinate system is the same as the third column vector of the rotation matrix R. Therefore, the c-axis direction in the sample coordinate system is calculated as [sinφsinψ₁, -sinφcosψ₁, cosφ]^T.

Since the converted c-axis vector is a value for each pixel, a process of clustering pixels into crystal grain units is necessary in order to calculate the properties of crystal grain units. Clustering is performed through the following process.

Using the DBSCAN algorithm, which is a type of clustering algorithm, the first clustering is performed on the c-axis vector under the conditions of the parameters eps = 2 sin(0.5°) ~ 2 sin(1°), minPts = 100 ~ 200, and the number n of representative c-axis direction types is obtained under the above conditions. Using the n obtained here, the second clustering is performed using the KMeans algorithm, which is a type of clustering algorithm (the number of clusters is fixed to n). As a result of the first and second clustering (angle clustering), clustering for the entire c-axis direction is completed. Since clustering is performed only in the c-axis direction, crystals existing in independent positions on the image are also clustered as the same crystal, and therefore, additional clustering for position is required. For the pixel positions within each c-axis direction cluster in which the first and second clusterings are performed, DBSCAN is performed under the conditions of the DBSCAN parameters eps = 3, minPts = 1~3 to obtain clusters by position again (position clustering). The cluster that has gone through the above process is assumed to be a primary particle, and the c-axis direction within the primary particle is reset to the average direction of the c-axis direction of the pixels included in the primary particle. Thereby, the segmentation of the primary particle and its c-axis direction are obtained. For reference, clusters with a pixel area of 8 or less are removed for noise removal.

In the above process, the cluster number (crystal grain number) of each pixel in the data and the direction vector c per crystal grain are obtained.

Then, the DoA Crystal value is calculated as follows. First, the square value of the sine value of the small intersection angle between the direction vector r from the center of the secondary particle to the pixel and the direction vector c at the pixel location is calculated for each pixel. The small intersection angle is 0 to 90°, and the sine value and the sine square value are 0 to 1. When calculating the direction vector at the center of the secondary particle, the coordinate system is set so that the left side is +x and the lower side is +y, because also in the coordinate system of the calculated c-axis vector, the left side is +x and the lower side is +y direction. This may be defined differently by equipment and software, and should be set according to the situation. The important thing is that the coordinate systems of the direction vector and the c-axis vector must be the same. If the sine square values calculated for each pixel are averaged, this value becomes the DoA Crystal value.

In addition, the L value described in this specification can be obtained, for example, by performing clustering to determine a specific crystal grain and its c-axis direction and in this case, obtaining the length of the longest axis among the c-axis direction vectors passing through the crystal grain within the two-dimensionally projected particles (c-axis length of the crystal grain), defining the axis perpendicular to the projected c-axis as the a-axis and obtaining the length of the longest axis among the a-axis direction vectors passing through the crystal grain (a-axis length of the crystal grain), and then dividing the a-axis length of the crystal grain by the c-axis length of the crystal grain. Here, since the a-axis and the c-axis are defined regardless of the major and minor axes of the ellipse, the L value may have an arbitrary value.

The DoA Crystal value calculated through the above Equation 1 refers to a value indicating how much the c-axis direction vector of the corresponding crystal grain is inclined with respect to a straight line passing through the center of gravity and the surface of the positive electrode active material precursor, and the closer the DoA Crystal value is to 1, the more the angle between the c-axis direction vector and the straight line of the corresponding crystal grain is perpendicular.

According to the present invention, the average of the structural orientation DoA crystal values represented by Equation 1 above is 0.5 or more. When the average DoA Crystal value, which is a parameter that can indicate the structural orientation, is 0.5 or more, an optimal lithium movement path within the particles is secured, and the structural stability is improved during charging and discharging, so that a positive electrode active material having excellent lifespan and lifespan resistance characteristics can be implemented. The average of the structural orientation DoA crystal values represented by Equation 1 above may be specifically 0.500 or more, 0.600 or more, 0.700 or more, 0.750 or more, and 0.880 or less, 0.890 or less, 0.900 or less, 0.950 or less, or less than 1.00. More specifically, the average of the structural orientation DoA crystal values represented by Equation 1 above may be 0.7 to 0.8.

On the other hand, when the average of the DoA Crystal values is less than 0.5, a lithium migration path is not secured, so there is a problem that the lifespan and lifespan resistance characteristics of the positive electrode active material manufactured therefrom are poor.

The structural orientation of the positive electrode active material precursor varies depending on the raw material type/concentration/mixing ratio, input speed, pH conditions, reaction temperature, stirring speed, reaction time, etc. used in the production of the positive electrode active material precursor. Therefore, by appropriately controlling these, the positive electrode active material precursor satisfying the average of the structural orientation DoA Crystal values of the present invention can be produced.

According to the present invention, the positive electrode active material precursor may have an average of L values of 0.3 or more according to Equation 2 below:

[Equation 2] $L = \left(a-axis length of crystal grain\right) / \left(c-axis length of crystal grain\right)$
wherein the a-axis length of the crystal grain is a length of the longest axis among the a-axis direction vectors passing through the crystal grain, and the c-axis length of the crystal grain is a length of the longest axis among the c-axis direction vectors passing through the crystal grain.

The above (a-axis length of crystal grains/c-axis length of crystal grains) is different from (major axis/minor axis) defined by the shape of the particle, and even if the particle has a long shape, the (a-axis length of crystal grains/c-axis length of crystal grains) value may be low.

According to the present invention, when the average of the L values according to Equation 2 above is 0.3 or more, a positive electrode active material having an improved orientation with an optimal lithium movement path and structural stability during charging and discharging can be implemented.

According to the present invention, the average of the L values according to Equation 2 above may be specifically 0.3 or more, 0.35 or more, 0.4 or more, or 0.45 or more, and 2.5 or less, 3.0 or less, 3.5 or less, 4.0 or less, 4.5 or less, 5.0 or less, 5.5 or less, or 6.0 or less.

According to the present invention, the positive electrode active material precursor may include a composite transition metal hydroxide containing two or more transition metals, and for example, may include a composite transition metal hydroxide represented by Chemical Formula 1 below:

[Chemical Formula 1] NiₐCo_{b}Mn_{c}M_{d}(OH)₂

wherein M is at least one element selected from the group consisting of Al, W, Cu, Fe, V, Cr, Ti, Zr, Zn, Ta, Y, In, La, Sr, Ga, Sc, Gd, Sm, Ca, Ce, Nb, Mg, B, and Mo,
$0.6 \leq a < 1.0 , 0 < b < 0.4 , 0 < c < 0.4 , and 0 \leq d \leq 0.2 .$

The a represents a ratio of the number of moles of Ni to the number of moles of the entire transition metal, and may be 0<a<1, preferably 0.3≤a<1, more preferably 0.6≤a<1, and even more preferably 0.8≤a<1.

The b represents a ratio of the number of moles of Co to the number of moles of the entire transition metal, and may be 0<b<1, preferably 0<b<0.7, more preferably 0<b<0.4, and even more preferably 0<b<0.2.

The c represents a ratio of the number of moles of Mn to the number of moles of the entire transition metal, and may be 0<c<1, preferably 0<c<0.7, more preferably 0<c<0.4, and even more preferably 0<c<0.2.

The d represents a ratio of the number of moles of M to the number of moles of the entire transition metal, and may be 0≤d≤0.2, preferably 0≤d≤0.15, and even more preferably 0≤d≤0.10.

According to the present invention, the positive electrode active material precursor may have a BET specific surface area of 2.0 m²/g to 15.0 m²/g. Specifically, the BET specific surface area of the positive electrode active material precursor may be 2.0 m²/g or more, 2.1 m²/g or more, 2.2 m²/g or more, 2.3 m²/g or more, 2.4 m²/g or more, 2.5 m²/g or more, 2.6 m²/g or more, 2.7 m²/g or more, 2.8 m²/g or more, 2.9 m²/g or more, or 3.0 m²/g or more, and may be 10.0 m²/g or less, 11.0 m²/g or less, 12.0 m²/g or less, 13.0 m²/g or less, 14.0 m²/g or less, or 15.0 m²/g or less. More specifically, the BET specific surface area of the positive electrode active material precursor may be 3.0 m²/g to 15.0 m²/g. When the BET specific surface area is within the above range, the reactivity with lithium during calcination is good, thereby increasing the efficiency (reduction in calcination temperature/time) in the calcination process, and a positive electrode active material having an improved orientation with an optimal lithium movement path and structural stability during charging and discharging can be implemented.

According to the present invention, the positive electrode active material precursor may have an average particle diameter (D₅₀) of 2.0 µm to 20.0 µm. The average particle diameter (D₅₀) of the positive electrode active material precursor is an average particle diameter of the secondary particles, and specifically, may be 2.0 µm or more, 3.0 µm or more, or 4.0 µm or more, and may be 10.5 µm or less, 11.0 µm or less, 12.0 µm or less, 13.0 µm or less, 14.0 µm or less, 15.0 µm or less, 16.0 µm or less, 17.0 µm or less, 18.0 µm or less, 19.0 µm or less, or 20.0 µm or less. When the average particle diameter (D₅₀) is within the above range, a ratio of the external surface area of the positive electrode active material where a side reaction occurs in the electrode and the internal size of the positive electrode active material where lithium ion movement is relatively slow compared to the electrolyte is appropriate, so that a battery with advantageous lifespan and lifespan resistance characteristics can be implemented.

### Positive Electrode Active Material

The present invention provides a positive electrode active material which is a calcined product of a mixture of the above positive electrode active material precursor and a lithium raw material. That is, the positive electrode active material may be manufactured by mixing the positive electrode active material precursor according to the present invention with a lithium raw material and then calcining the mixture. In addition, the positive electrode active material can be manufactured from the positive electrode active material precursor according to the present invention, thereby implementing a positive electrode active material having an improved orientation with an optimal lithium movement path and structural stability during charging and discharging.

The lithium raw material may be, for example, a lithium-containing carbonate (e.g., lithium carbonate, etc.), a hydrate (e.g., lithium hydroxide hydrate (LiOH·H₂O), etc.), a hydroxide (e.g., lithium hydroxide, etc.), a nitrate (e.g., lithium nitrate (LiNO₃), etc.), a chloride (e.g., lithium chloride (LiCl), etc.), etc., and one alone or a mixture of two or more thereof may be used.

Meanwhile, the mixing of the positive electrode active material precursor and the lithium raw material may be performed by solid-state mixing, and a mixing ratio of the positive electrode active material precursor and the lithium raw material may be determined in a range that satisfies an atomic fraction of each component in the positive electrode active material to be finally manufactured. For example, the positive electrode active material precursor and the lithium raw material may be mixed in an amount such that the molar ratio of transition metal included in the positive electrode active material precursor to Li is 1:0.9 to 1:1.2, preferably 1:0.98 to 1:1.1. When the positive electrode active material precursor and the lithium raw material are mixed within the above range, a positive electrode active material exhibiting excellent capacity characteristics can be manufactured.

The calcination may be performed at 600°C to 1000°C, preferably 700°C to 900°C, and the calcination time may be 5 hours to 30 hours, preferably 10 hours to 20 hours, but is not limited thereto.

The positive electrode active material may have an average particle diameter (D₅₀) of 2.0 µm to 20.0 µm.

The positive electrode active material may have a composition represented by Chemical Formula 2 below:

[Chemical Formula 2] Liₓ[Niₐ₂Co_{b2}Mn_{c2}M_{d2}]O₂

wherein:
M is at least one element selected from the group consisting of Al, W, Cu, Fe, V, Cr, Ti, Zr, Zn, Ta, Y, In, La, Sr, Ga, Sc, Gd, Sm, Ca, Ce, Nb, Mg, B, and Mo,
0.9≤x≤1.2, 0.6≤a2<1.0, 0<b2<0.4, 0<c2<0.4, and 0≤d2≤0.2.

### Positive Electrode

The present invention provides a positive electrode including the positive electrode active material.

The positive electrode may include a positive electrode current collector and a positive electrode active material layer formed on the positive electrode current collector, wherein the positive electrode active material layer may include the positive electrode active material.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 µm to 500 µm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material, may optionally include a conductive material and a binder, if necessary. In this case, the positive electrode active material may be included in an amount of 80% to 99% by weight, more specifically 85% to 98.5% by weight, based on the total weight of the positive electrode active material layer, and can exhibit excellent capacity characteristics within this range.

The conductive material is used to impart conductivity to the electrode, and may be any material without particular limitation as long as it has electronic conductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as zinc oxide and potassium titanate; a conductive metal oxide such as a titanium oxide; or a conductive polymer such as a polyphenylene derivative, and any one or a mixture of two or more thereof may be used. The conductive material may be included in an amount of 0.1% by weight to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1% by weight to 15% by weight based on the total weight of the positive electrode active material layer.

The positive electrode may be manufactured according to a conventional positive electrode manufacturing method except for the use of the positive electrode active material described above. Specifically, the above positive electrode active material and, if necessary, a binder, a conductive material, and a dispersant may be dissolved or dispersed in a solvent to prepare a composition for forming a positive electrode active material layer, which may be applied on a positive electrode current collector, and then dried and rolled to manufacture the positive electrode. Alternatively, the positive electrode may be manufactured by casting a composition for forming a positive electrode active material layer on a separate support, peeling off the support to obtain a film, and laminating the film on a positive electrode current collector.

The solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder, and dispersant in consideration of the application thickness of the slurry and the manufacturing yield, and to allow the slurry to have a viscosity capable of exhibiting excellent thickness uniformity when applied for the subsequent positive electrode production.

### Lithium Secondary Battery

The present invention provides a lithium secondary battery comprising: the positive electrode; a negative electrode; and a separator and an electrolyte interposed between the positive electrode and the negative electrode.

The lithium secondary battery may optionally further include a battery container for accommodating an electrode assembly formed of the positive electrode, negative electrode, and separator, and a sealing member for sealing the battery container.

The negative electrode may include a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 µm to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer may optionally include a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiO_{β} (0<β<2), SnO₂, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes. The negative electrode active material may be included in an amount of 80% to 99% by weight based on the total weight of the negative electrode active material layer.

The binder of the negative electrode active material layer is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material of the negative electrode active material layer is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material may be dissolved or dispersed in a solvent to prepare a composition for forming a negative electrode active material layer, which may be applied on a negative electrode current collector and dried to produce the negative electrode. Alternatively, the negative electrode may be manufactured by casting the composition for forming a negative electrode active material layer on a separate support, peeling a film from the support, and then laminating the film on a negative electrode current collector.

The separator is to separate the negative electrode and the positive electrode, and to provide a passage for lithium ions to move. Any separator may be used without particular limitation as long as it is generally used as a separator in the lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multilayer structure.

The electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto. As specific example, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt is preferably used at a concentration ranging from 0.1 M to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

Since the lithium secondary battery including the positive electrode active material according to the present invention has excellent capacity characteristics, initial efficiency, resistance characteristics, and lifespan characteristics, it is useful in the field of portable devices such as mobile phones, laptop computers, digital cameras, and electric vehicles such as hybrid electric vehicle (HEV) and electric vehicle (EV).

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells.

Accordingly, a battery module including the lithium secondary battery as a unit cell and a battery pack including the same are provided.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

### [Modes for Carrying Out the Invention]

Hereinafter, examples of the present invention will be described in detail so that those skilled in the art can easily implement the present invention. However, the present invention may be embodied in a variety of forms and is not limited to the examples described herein.

### EXAMPLES

### Example 1

NiSO₄, CoSO₄, and MnSO₄ were mixed in distilled water in an amount such that the molar ratio of nickel:cobalt:manganese was 65:15:20 to prepare an aqueous transition metal solution having a concentration of 2.4 M.

Then, deionized water was added to a 20L reactor, and then nitrogen gas was injected into the reactor at 30 L/hr to remove dissolved oxygen in the water and create a non-oxidizing atmosphere inside the reactor. Thereafter, a 25 wt% NaOH aqueous solution was introduced so that the pH inside the reactor was maintained at 11.40 to 12.50.

Thereafter, the aqueous transition metal solution was injected into the reactor at a rate of 1.5 L/hr, 25 wt% NaOH aqueous solution was injected to maintain a pH of 11.40 to 12.50, and 9 wt% NH₄OH aqueous solution was injected at a rate of 0.3 L/hr, respectively, while the reaction was conducted under the conditions of a reaction temperature of 60°C, a pH of 11.40 to 12.50, and a stirring speed of 250 to 1000 rpm until the average particle diameter (D₅₀) became 9.0 µm. Thereafter, it was washed with water, filtered, and dried to prepare a positive electrode active material precursor having a composition represented by Ni_{0.65}Co_{0.15}Mn_{0.20}(OH)₂.

Thereafter, the positive electrode active material precursor and Li₂CO₃ were mixed so that the molar ratio of (Ni+Co+Mn):Li was 1:1.05, and calcined at 850°C for 10 hours under an air atmosphere to manufacture a positive electrode active material.

### Example 2

NiSO₄, CoSO₄, and MnSO₄ were mixed in distilled water in an amount such that the molar ratio of nickel:cobalt:manganese was 70:10:20 to prepare an aqueous transition metal solution having a concentration of 2.4 M.

Then, deionized water was added to a 20L reactor, and then nitrogen gas was injected into the reactor at 30 L/hr to remove dissolved oxygen in the water and create a non-oxidizing atmosphere inside the reactor. Thereafter, a 25 wt% NaOH aqueous solution was introduced so that the pH inside the reactor was maintained at 11.10 to 12.45.

Thereafter, the aqueous transition metal solution was injected into the reactor at a rate of 1.5 L/hr, 25 wt% NaOH aqueous solution was injected to maintain pH 11.10 to 12.45, and 9 wt% NH₄OH aqueous solution was injected at a rate of 0.1 L/hr, respectively, while the reaction was conducted under the conditions of a reaction temperature of 50°C, a pH of 11.10 to 12.45, and a stirring speed of 250 to 1000 rpm until the average particle diameter (D₅₀) became 9.0 µm. Thereafter, it was washed with water, filtered, and dried to prepare a positive electrode active material precursor having a composition represented by Ni_{0.7}Co_{0.1}Mn_{0.2}(OH)₂.

Thereafter, the positive electrode active material precursor and LiOH were mixed so that the molar ratio of (Ni+Co+Mn):Li was 1:1.05, and calcined at 820°C for 10 hours under an oxygen atmosphere to manufacture a positive electrode active material.

### Example 3

NiSO₄, CoSO₄, and MnSO₄ were mixed in distilled water in an amount such that the molar ratio of nickel:cobalt:manganese was 88:5:7 to prepare an aqueous transition metal solution having a concentration of 2.4 M.

Then, deionized water was added to a 20L reactor, and then nitrogen gas was injected into the reactor at 30 L/hr to remove dissolved oxygen in the water and create a non-oxidizing atmosphere inside the reactor. Thereafter, a 25 wt% NaOH aqueous solution was introduced so that the pH inside the reactor was maintained at 10.55 to 12.10.

Thereafter, the aqueous transition metal solution was injected into the reactor at a rate of 1.5 L/hr, 25 wt% NaOH aqueous solution was injected to maintain a pH of 10.55 to 12.10, and 9 wt% NH₄OH aqueous solution was injected at a rate of 0.1 L/hr, respectively, while the reaction was conducted under the conditions of a reaction temperature of 50°C, a pH of 10.55 to 12.10, and a stirring speed of 250 to 1000 rpm until the average particle diameter (D₅₀) became 10.0 µm. Thereafter, it was washed with water, filtered, and dried to prepare a positive electrode active material precursor having a composition represented by Ni_{0.88}Co_{0.05}Mn_{0.07}(OH)₂.

Thereafter, the positive electrode active material precursor and LiOH were mixed so that the molar ratio of (Ni+Co+Mn):Li was 1:1.07, and calcined at 770°C for 10 hours under an oxygen atmosphere to manufacture a positive electrode active material.

### Example 4

NiSO₄, CoSO₄, and MnSO₄ were mixed in distilled water in an amount such that the molar ratio of nickel:cobalt:manganese was 88.5:3.5:8 to prepare an aqueous transition metal solution having a concentration of 2.4 M.

Then, deionized water was added to a 20L reactor, and then nitrogen gas was injected into the reactor at 30 L/hr to remove dissolved oxygen in the water and create a non-oxidizing atmosphere inside the reactor. Thereafter, a 25 wt% NaOH aqueous solution was introduced so that the pH inside the reactor was maintained at 12.50 to 12.90.

Thereafter, the aqueous transition metal solution was injected into the reactor at a rate of 1.5 L/hr, 25 wt% NaOH aqueous solution was injected to maintain a pH of 12.50 to 12.90, and 9 wt% NH₄OH aqueous solution was injected at a rate of 0.3 L/hr, respectively, while the reaction was conducted under the conditions of a reaction temperature of 50°C, a pH of 12.50 to 12.90, and a stirring speed of 250 to 1000 rpm until the average particle diameter (D₅₀) became 4.2 µm. Thereafter, it was washed with water, filtered, and dried to prepare a positive electrode active material precursor having a composition represented by Ni_{0.885}Co_{0.035}Mn_{0.08}(OH)₂.

Thereafter, the positive electrode active material precursor and LiOH were mixed so that the molar ratio of (Ni+Co+Mn):Li was 1:1.07, and calcined at 770°C for 10 hours under an oxygen atmosphere to manufacture a positive electrode active material.

### Experimental Example

### Experimental Example 1

Each of the positive electrode active material precursors prepared in Examples 1 to 4 above were fabricated into thin sections using a Focused Ion Beam (Thermo Fisher Scientific, Helios 5), and then TEM-ASTAR (NanoMEGAS, ASTAR) analysis was performed to obtain an average of DoA Crystal values.

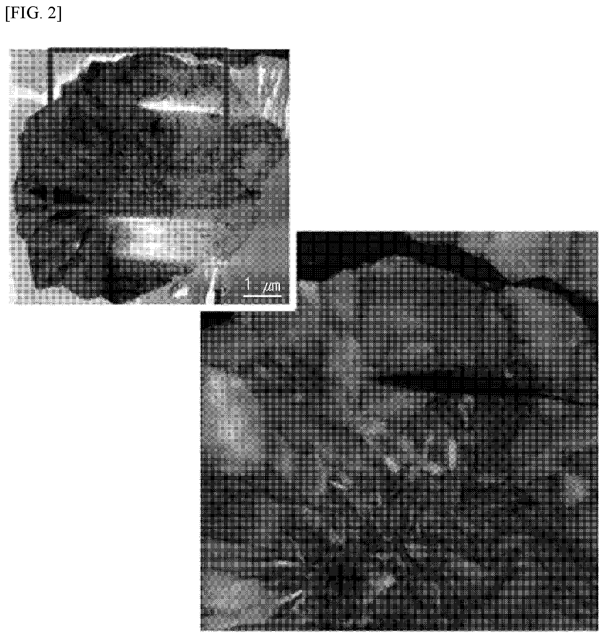

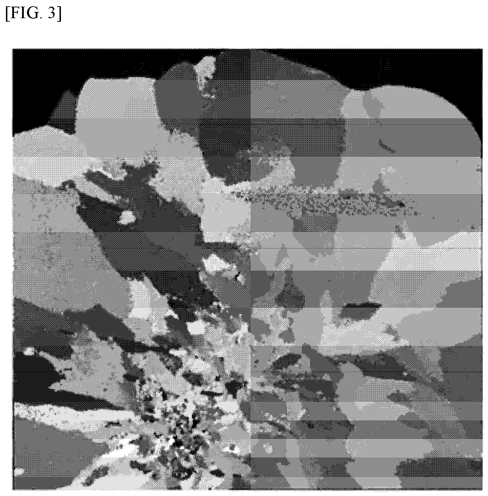

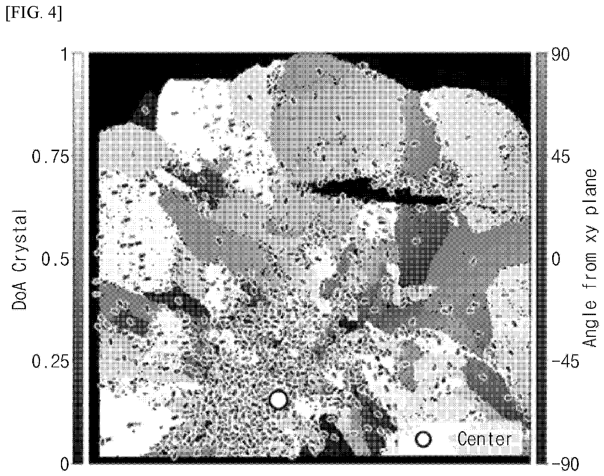

FIGS. 2 to 4 are sequentially the TEM image (FIG. 2), c-axis direction map (FIG. 3), and image showing the DoA Crystal and the angle between the c-axis and the xy-plane (FIG. 4) of the positive electrode active material precursor according to Example 1.

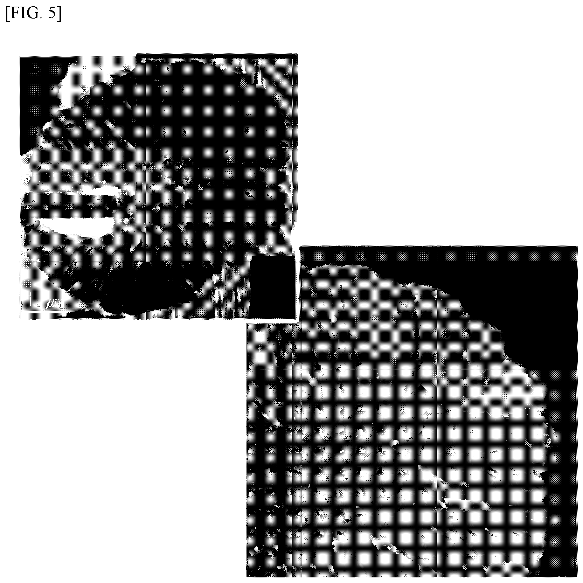

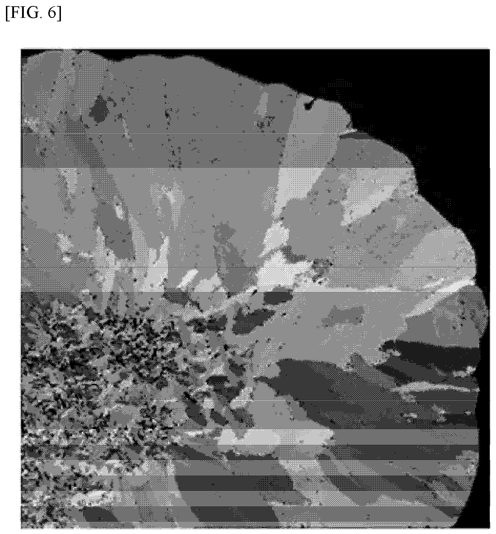

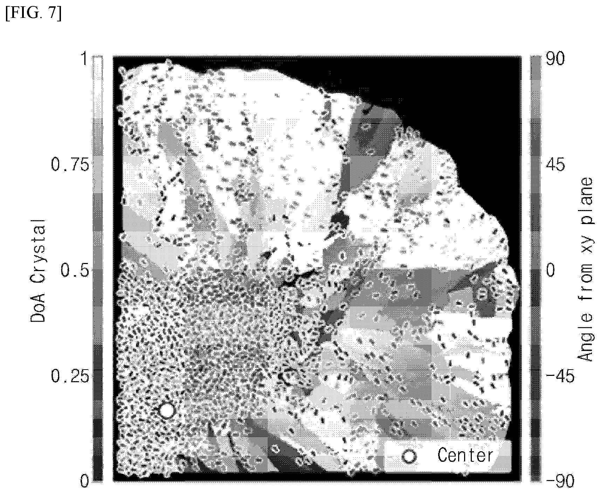

FIGS. 5 to 7 are sequentially the TEM image (FIG. 5), c-axis direction map (FIG. 6), and image showing the DoA Crystal and the angle between the c-axis and the xy-plane (FIG. 7) of the positive electrode active material precursor according to Example 2.

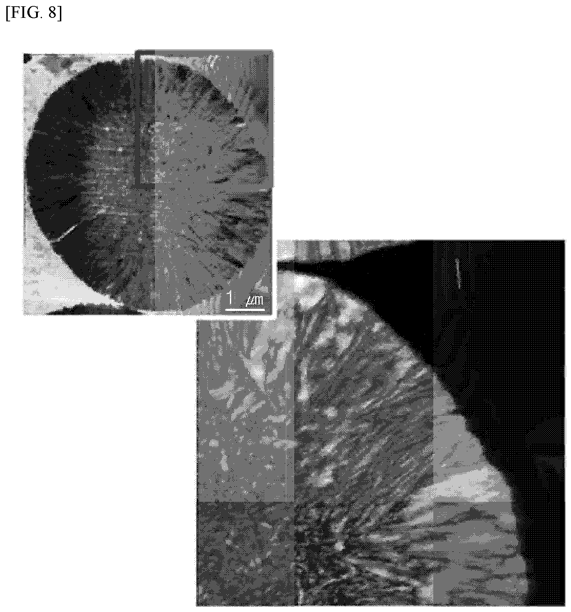

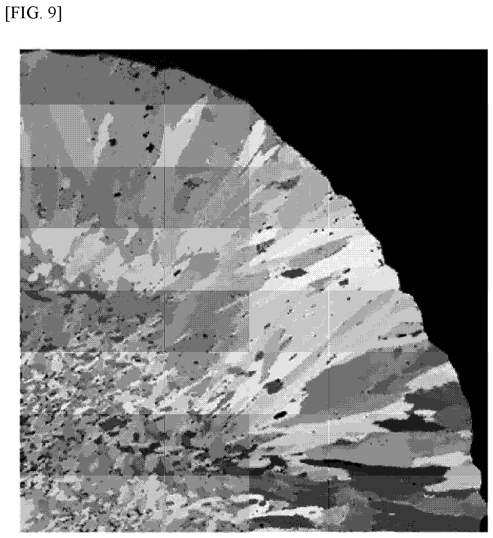

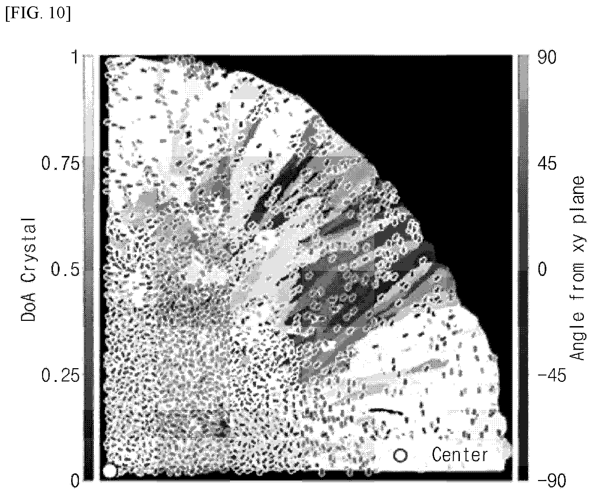

FIGS. 8 to 10 are sequentially the TEM image (FIG. 8), c-axis direction map (FIG. 9), and image showing the DoA Crystal and the angle between the c-axis and the xy-plane (FIG. 10) of the positive electrode active material precursor according to Example 3.

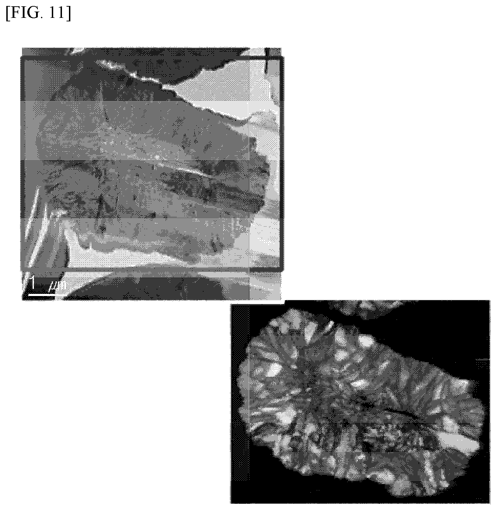

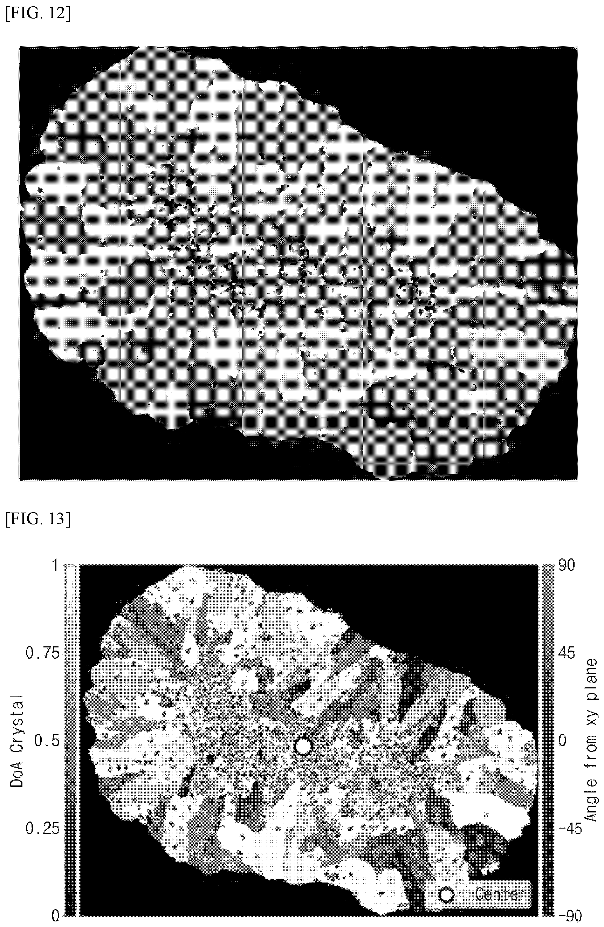

FIGS. 11 to 13 are sequentially the TEM image (FIG. 11), c-axis direction map (FIG. 12), and image showing the DoA Crystal and the angle between the c-axis and the xy-plane (FIG. 13) of the positive electrode active material precursor according to Example 4.

The c-axis direction maps of FIGS. 3, 6, 9, and 12 visualize the c-axis vector as an RGB image by converting '-1' to '0' and '1' to '255' for each x, y, and z component; and FIGS. 4, 7, 10, and 13 are images showing the DoA Crystal and the angle between the c-axis and the xy-plane, wherein the value of each pixel represents sin²θ, the arrow represents a two-dimensional projection of the c-axis vector of the corresponding crystal, and the color of the arrow represents the angle between the c-axis and the xy-plane (screen).

In addition, the (a-axis length of crystal grain/c-axis length of crystal grain) of each of the positive electrode active material precursors prepared in Examples 1 to 4 was obtained through XRD analysis. Specifically, using XRD (Panalyticla, Empyrean), data in the 2θ 10°~90° region were obtained under the conditions of Cu target, voltage 45 kV, and current 40 mA, and the FWHM (Full Width Half Maximum) of the (001) peak existing in the 18°~20° region and the (100) peak existing in the 32°~34° region were obtained, and the FWHM (001)/FWHM (100) value was calculated to obtain (a-axis length of crystal grains/c-axis length of crystal grains) and the average value thereof.

In addition, the BET specific surface area of each of the positive electrode active material precursors prepared in Examples 1 to 4 was obtained according to the BET method from the nitrogen gas adsorption amount at liquid nitrogen temperature (77 K) using BELSORP mini-II of BEL Japan.

Finally, the average particle diameter (D₅₀) of each of the positive electrode active material precursors prepared in Examples 1 to 4 was obtained using PSA (Microtrac, S3500).

The results were shown in Table 1 below.

**[Table 1]**

| Division | Average of DoA Crystal values | Average of (a-axis length of crystal grains/c-axis length of crystal grains) values | BET specific surface area [m²/g] | Average particle diameter (D₅₀) (µm) |
|---|---|---|---|---|
| Example 1 | 0.803 | 0.45 | 3.13 | 8.95 |
| Example 2 | 0.793 | 0.89 | 5.93 | 9.00 |
| Example 3 | 0.880 | 2.16 | 9.17 | 10.00 |
| Example 4 | 0.751 | 1.45 | 7.28 | 4.20 |

### Experimental Example 2

Each positive electrode active material manufactured in Examples 1 to 4, carbon black conductive material, and PVdF binder were mixed in a weight ratio of 96:2:2 in N-methylpyrrolidone solvent to prepare a positive electrode slurry, which was then applied to one surface of an aluminum current collector, dried at 100°C, and rolled to manufacture a positive electrode.

A porous polyethylene separator was interposed between the positive electrode manufactured as described above and a negative electrode (lithium metal) to manufacture an electrode assembly, which was then positioned inside a case, and an electrolyte was injected into the case to manufacture a lithium secondary battery. In this case, the electrolyte was prepared by dissolving lithium hexafluorophosphate (LiPF₆) having a concentration of 1.0 M in an organic solvent composed of ethylene carbonate, ethyl methyl carbonate, and diethyl carbonate (volume ratio = 3:4:3).

Each of the lithium secondary batteries manufactured as described above was charged to 4.25 V at a constant current of 1 C and a cut-off of 3 C at 45°C, and then discharged to 3.0 V at a constant current of 0.33 C. The above charging and discharging behaviors were taken as 1 cycle, and this cycle was repeated 50 times, and then, the capacity retention rate and the resistance increase rate according to the cycle were calculated and shown in Table 2 below. The capacity retention rate is the percentage of the discharge capacity in the 50^{th} cycle (50^{th} capacity) to the discharge capacity in the 1^{st} cycle (initial capacity) ({(50^{th} capacity)/(initial capacity)}×100 [%]), and the resistance increase rate is the percentage of the resistance in the 50^{th} cycle (50^{th} resistance) to the resistance in the 1^{st} cycle (initial resistance) ({(50^{th} resistance)/(initial resistance)}×100 [%]).

**[Table 2]**

| Division | Capacity retention rate [%] | Resistance increase rate [%] |
|---|---|---|
| Example 1 | 97.1 | 6.7 |
| Example 2 | 96.3 | 9.4 |
| Example 3 | 95.8 | 12.5 |
| Example 4 | 95.3 | 18.3 |

Referring to Table 1 and FIGS. 2 to 13 above, in the case of the positive electrode active material precursors of Examples 1 to 4, it can be confirmed that they are in the form of a secondary particle formed by aggregation of a plurality of primary particles, and the average of the structural orientation DoA Crystal values represented by Equation 1 described herein is 0.5 or more. In addition, in the case of the positive electrode active material precursors of Examples 1 to 4, it can be confirmed that the average of the L values according to Equation 2 described herein is 0.3 or more, and the BET specific surface area is within the range of 2 m²/g to 15 m²/g.

Referring to Table 2 above, it can be confirmed that the battery including the positive electrode active material manufactured from the positive electrode active material precursors of Examples 1 to 4 has a high capacity retention rate of 95.0% or more under high temperature conditions, and a low resistance increase rate of 18.5% or less.

In conclusion, it can be seen that the positive electrode active material precursor of the present invention satisfies an average of DoA Crystal values, which is a parameter that can indicate a structural orientation of crystal grains, of 0.5 or more, thereby enabling the implementation of a positive electrode active material having an optimal lithium mobility and improved structural stability during charging and discharging.

## Claims

1. A positive electrode active material precursor having:
a secondary particle form formed by aggregation of a plurality of primary particles, and
an average of structural orientation DoA Crystal values of 0.5 or more as represented by Equation 1 below: [Equation 1] $DoA Crystal = {sin}^{2} θ$
wherein θ is an angle between a vector in the straight direction from the center of the secondary particle to the surface and a vector in the c-axis direction of the crystal grain after obtaining a TEM image of the cross-section of the positive electrode active material precursor.

2. The positive electrode active material precursor according to claim 1, wherein the average of the DoA crystal values is 0.6 or more.

3. The positive electrode active material precursor according to claim 1, wherein the average of the DoA crystal values is 0.7 or more.

4. The positive electrode active material precursor according to claim 1, wherein the positive electrode active material precursor has an average of L values of 0.3 or more according to Equation 2 below: [Equation 2] $L = \left(a-axis length of crystal grain\right) / \left(c-axis length of crystal grain\right)$ wherein the a-axis length of the crystal grain is a length of the longest axis among the a-axis direction vectors passing through the crystal grain, and the c-axis length of the crystal grain is a length of the longest axis among the c-axis direction vectors passing through the crystal grain.

5. The positive electrode active material precursor according to claim 4, wherein the average of the L values is 0.4 or more.

6. The positive electrode active material precursor according to claim 4, wherein the average of the L values is 0.5 or more.

7. The positive electrode active material precursor according to claim 1, wherein the positive electrode active material precursor comprises a composite transition metal hydroxide represented by the following Chemical Formula 1:
[Chemical Formula 1] NiₐCo_{b}Mn_{c}M_{d}(OH)₂
wherein M is at least one element selected from the group consisting of Al, W, Cu, Fe, V, Cr, Ti, Zr, Zn, Ta, Y, In, La, Sr, Ga, Sc, Gd, Sm, Ca, Ce, Nb, Mg, B, and Mo, $0.6 \leq a < 1.0 , 0 < b < 0.4 , 0 < c < 0.4 , and 0 \leq d \leq 0.2 .$

8. The positive electrode active material precursor according to claim 1, wherein the positive electrode active material precursor has a BET specific surface area of 2.0 m²/g to 15.0 m²/g.

9. The positive electrode active material precursor according to claim 1, wherein the positive electrode active material precursor has a BET specific surface area of 3.0 m²/g to 15.0 m²/g.

10. The positive electrode active material precursor according to claim 1, wherein the positive electrode active material precursor has an average particle diameter (D₅₀) of 2.0 µm to 20.0 µm.
